# EUROPEAN PATENT APPLICATION

(11) **EP 4 287 680 A1**
(43) Date of publication of application: **06.12.2023**
(21) Application number: 22745629.0
(22) Date of filing: 17.01.2022
(51) Int. Cl.: H04W 16/14, H04W 4/33, H04W 28/18

(54) **COMMUNICATION CONTROL DEVICE AND COMMUNICATION CONTROL METHOD**

(30) Priority: 27.01.2021 JP 2021011273
(71) Applicant: Sony Group Corporation, Tokyo 108-0075 (JP)
(72) Inventor: KASAI, Hirofumi, Tokyo 108-0075 (JP); FURUICHI, Sho, Tokyo 108-0075 (JP)
(74) Representative: D Young & Co LLP
(86) International application number: PCT/JP2022/001409
(87) International publication number: WO 2022/163406

(57) **Abstract**

Provided are a communication control apparatus and a communication control method, in which utilization efficiency of a frequency band is increased. A communication control apparatus according to the present disclosure includes a processing unit configured to, in a case where a first request for radio wave use of a first wireless communication apparatus belonging to a first group is received, determine parameter information regarding a radio wave capable of being used for the first wireless communication apparatus on the basis of installation environment information regarding the first wireless communication apparatus and another wireless communication apparatus belonging to the first group.

## Description

### TECHNICAL FIELD

The present disclosure relates to a communication control apparatus and a communication control method.

### BACKGROUND ART

While a data communication band required for a wireless network continues to expand, usable frequency resources are limited. Therefore, a frequency sharing technology for sharing a band portion that is not temporally or spatially used among frequency bands allocated for an existing application among wireless communication systems has been studied. Non-Patent Document 1 discloses a frequency sharing technology put into practical use in North America.

In the frequency sharing technology disclosed in Non-Patent Document 1, whether to share a frequency is determined in consideration of only a planar positional relationship (for example, a positional relationship based on longitude and latitude), that is, a two-dimensional condition, and a three-dimensional condition such as a height from the ground surface is not considered. On the other hand, Patent Document 1 proposes a method for sharing a frequency band in consideration of the three-dimensional condition.

However, the method disclosed in Patent Document 1 significantly increases the calculation amount for determining whether to share the frequency. Furthermore, the method disclosed in Patent Document 1 is difficult to efficiently coexist with the frequency sharing technology put into practical use by Non-Patent Document 1.

### CITATION LIST

### PATENT DOCUMENT

Patent Document 1: Japanese Patent No. 6277893 NON PATENT DOCUMENT

Non-Patent Document 1: FCC, "GN Docket No.12-354 NOTICE OF PROPOSED RULEMAKING AND ORDER", December 2012

### SUMMARY OF THE INVENTION

### PROBLEMS TO BE SOLVED BY THE INVENTION

The present disclosure provides a communication control apparatus and a communication control method, in which utilization efficiency of a frequency band is increased.

### SOLUTIONS TO PROBLEMS

A communication control apparatus according to the present disclosure includes a processing unit configured to, in a case where a first request for radio wave use of a first wireless communication apparatus belonging to a first group is received, determine parameter information regarding a radio wave capable of being used for the first wireless communication apparatus on the basis of installation environment information regarding the first wireless communication apparatus and another wireless communication apparatus belonging to the first group.

A communication control method according to the present disclosure includes, in a case where a first request for a radio wave use of a first wireless communication apparatus belonging to a first group, determining parameter information regarding a radio wave capable of being used for the first wireless communication apparatus on the basis of installation environment information regarding the first wireless communication apparatus and another wireless communication apparatus belonging to the first group.

### BRIEF DESCRIPTION OF DRAWINGS

Fig. 1 is a block diagram illustrating a schematic configuration of a communication control system according to the present disclosure.
Fig. 2 is a block diagram illustrating an example of a configuration of a communication control apparatus according to an embodiment of the present disclosure.
Fig. 3 is a block diagram illustrating an example of a database apparatus according to the embodiment of the present disclosure.
Fig. 4 is a diagram illustrating an example of a database (table) stored in a database apparatus.
Fig. 5 is a diagram illustrating an example of a case where information regarding a new base station is added to the table of Fig. 4.
Fig. 6 is a flowchart illustrating an example of a procedure performed when a base station is newly installed.
Fig. 7 is a diagram illustrating an example of a flow until a base station obtains permission to use a frequency included in a shared band and starts transmission.
Fig. 8 is a flowchart illustrating an example of processing in which a communication control apparatus calculates a frequency that can be used for a base station in a group.
Fig. 9 is a flowchart illustrating an example of processing in which a communication control apparatus determines whether or not a frequency requested by a base station can be used in a group.
Fig. 10 is a diagram illustrating an example of a database (table) stored in a database apparatus.
Fig. 11 is a diagram illustrating an example of a flow until a base station obtains permission to use a frequency included in a shared band and starts transmission.
Fig. 12 is a flowchart illustrating an example of processing in which a communication control apparatus calculates a frequency that can be used for a base station in a group.
Fig. 13 is a flowchart illustrating an example of processing in which a communication control apparatus determines whether or not a frequency requested by a base station can be used in a group.
Fig. 14 is a diagram illustrating an installation image example in which two buildings are vertically adjacent to each other and an example of a database (table) stored in a database apparatus.
Fig. 15 is a diagram illustrating an installation image example in which two buildings are vertically adjacent to each other and an example of a database (table) stored in a database apparatus.
Fig. 16 is a diagram illustrating an installation image example in which three buildings are horizontally and vertically adjacent to each other and an example of a database (table) stored in a database apparatus.
Fig. 17 is a diagram illustrating an example of a rule for obtaining a condition under which base stations do not interfere with each other.
Fig. 18 is a diagram illustrating an example of a condition under which base stations do not interfere with each other, the condition being calculated according to the rule of Fig. 17.
Fig. 19 is a flowchart illustrating an example of processing in which a communication control apparatus calculates a frequency that can be used for a base station in a group.
Fig. 20 is a flowchart illustrating an example of processing in which a communication control apparatus determines whether or not a frequency requested by a base station can be used in a group.

### MODE FOR CARRYING OUT THE INVENTION

Hereinafter, an embodiment of the present disclosure is described in detail with reference to the drawings. In one or more embodiments shown in the present disclosure, elements included in each of the embodiments can be combined with each other, and the combined result also forms a part of the embodiments described in the present disclosure.

### [Schematic Configuration of System]

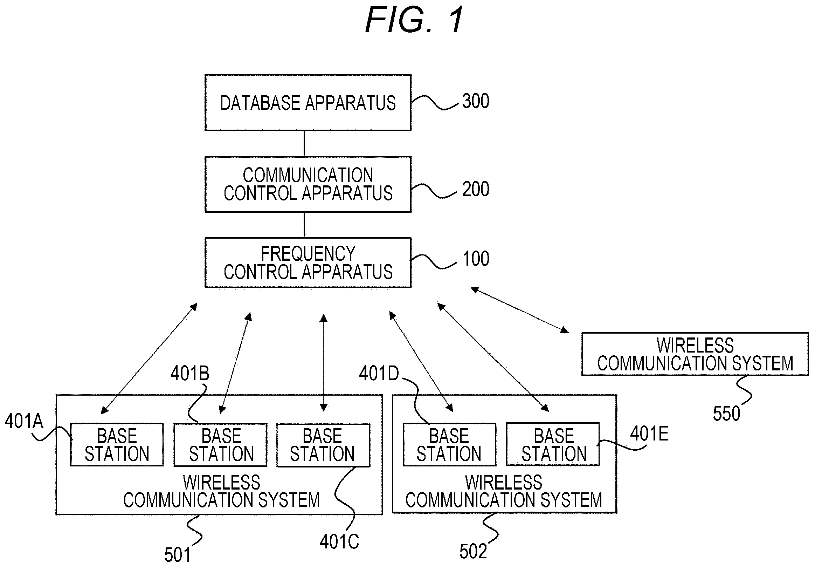

Fig. 1 is a block diagram illustrating a schematic configuration of a communication control system according to the present disclosure. The communication control system according to the present disclosure includes a frequency control apparatus 100, a communication control apparatus 200, a database apparatus 300, and a plurality of wireless communication systems 501, 502, and 550. The wireless communication system 501 includes base stations 401A to 401C, and the wireless communication system 502 includes base stations 401D and 401E. The base stations 401A to 401E are examples of wireless communication apparatuses. However, the wireless communication apparatus according to the present disclosure is not limited to a base station, and may be an access point. Alternatively, the wireless communication apparatus according to the present disclosure may be an apparatus that operates as a base station or an access point, an apparatus for performing D2D communication between terminal devices, or a moving relay base station. In a case where the base stations are not particularly distinguished, an arbitrary base station is referred to as a base station 401. Although three wireless communication systems are illustrated in Fig. 1, the number of wireless communication systems may be one, two, or four or more.

The wireless communication systems 501 and 502 are operated by different service providers (operators). The number of base stations included in one wireless communication system may be any number as long as the number thereof is one or more. Each base station 401 performs wireless communication with a device (for example, a terminal or the like (not illustrated)) by using a frequency band that can be shared between the wireless communication systems 501 and 502. The base station 401 can also perform wireless communication with the device (for example, the terminal or the like) by using a frequency band other than the frequency band that can be shared. The wireless communication systems 501 and 502 are, for example, cellular systems. However, each of the wireless communication systems 501 and 502 is not limited to the cellular system, and may be another type of wireless communication system. The shared band according to the present embodiment is a frequency band that can be shared between the wireless communication systems 501 and 502, but may be a frequency band that can be shared within a single wireless communication system 501 or a single wireless communication system 502.

The wireless communication system 550 is a wireless communication system having a priority different from that of the wireless communication systems 501 and 502 when the shared band is used. As an example, the wireless communication system 550 is a wireless communication system having a higher or lower priority than the wireless communication systems 501 and 502. For example, the wireless communication system having a high priority is a Navy vessel's radar system. For example, the wireless communication system having a low priority is a system similar to the wireless communication systems 501 and 502 (for example, a cellular system or the like). The wireless communication systems 501 and 502 are wireless communication systems having the same priority as each other when the shared band is used.

The frequency control apparatus 100 controls the frequency use of the wireless communication systems 501, 502, and 550. In a frequency band (shared band) that can be shared between the wireless communication systems 501 and 502, the frequency control apparatus 100 calculates, for the base station 401 (first wireless communication apparatus), a use condition of the shared band (condition related to a frequency that can be used in the shared band) by using two-dimensional information. For example, the shared band includes a plurality of frequencies (shared frequencies or subbands) that does not interfere with each other, and can be independently selected and used. The two-dimensional information is, for example, two-dimensional geographic information or the like. The use condition calculated using the two-dimensional information is referred to as "two-dimensional use condition". The frequency control apparatus 100 calculates the two-dimensional use condition on the basis of a use state of the shared band of the base station or the system other than the base station belonging to the same group as that of the base station 401 (for example, a base station of another group or a wireless communication system having a higher priority). The use condition between the base station 401 and another base station belonging to the same group is calculated by the communication control apparatus 200 to be described later. As an example, the two-dimensional use condition includes an identifier of a frequency (shared frequency) that can be used by the base station 401 and a maximum transmission power value that can be used at the frequency.

As a specific example, the frequency control apparatus 100 calculates a condition defined in US frequency sharing disclosed in Non-Patent Document 1 as the use condition (two-dimensional use condition). However, the frequency control apparatus 100 may calculate the use condition by another method. For example, when the base stations, whose positions are identified by longitude and latitude, are apart from each other to some extent and the base stations have transmission power to some extent, the use condition may be calculated on the basis of whether the same frequency can be shared by the base stations (whether interference does not occur).

The frequency control apparatus 100 receives a request for the use of a radio wave in the shared band (radio wave use request) from the base station 401. Examples of the radio wave use request include a request for calculating a usable frequency in the shared band and a request for permission to use a frequency (first frequency) specified by the base station 401 in the shared band. In the latter case, the radio wave use request includes information regarding a frequency that the base station 401 requests to use.

In a case where the radio wave use request is received from the base station 401, with respect to the base station or the system other than the group belonging to the base station 401, the frequency control apparatus 100 calculates the use condition (two-dimensional use condition) of the shared band for the base station 401 by using the two-dimensional information. Moreover, the frequency control apparatus 100 transmits a three-dimensional determination request to the communication control apparatus 200. The three-dimensional determination request includes a request for calculating a frequency that can be used for the base station 401 in the group by using three-dimensional information regarding each base station in the group to which the base station 401 belongs, or a request for calculating a use condition of the shared band (referred to as "three-dimensional use condition"). Alternatively, the three-dimensional determination request includes a request for determining whether to use the frequency requested by the base station 401 on the basis of the three-dimensional use condition. As an example, the three-dimensional use condition includes an identifier of a frequency (shared frequency) that can be used by the base station 401 in the group and a maximum transmission power value that can be used at the frequency.

The frequency control apparatus 100 receives a response including a usable frequency (three-dimensional use condition) or a determination result indicating whether or not the frequency can be used from the communication control apparatus 200. The frequency control apparatus 100 determines the frequency that can be used by the base station 401 or determines whether or not the frequency requested by the base station 401 can be used on the basis of the two-dimensional use condition and the received response. The frequency or whether or not the frequency can be used is an example of parameter information regarding a radio wave that can be used for the base station 401. Note that the frequency control apparatus 100 may receive the information indicating the three-dimensional use condition from the communication control apparatus 200, and determine whether or not the frequency requested by the base station 401 can be used on the basis of the three-dimensional use condition indicated by the received information.

In a case where the frequency requested by the base station 401 cannot be used (cannot be allowed), the frequency control apparatus 100 may determine, as an alternative frequency, a frequency (third frequency) to be used by the base station 401 among one or more other candidate frequencies in the shared band.

The frequency control apparatus 100 transmits, to the base station 401, a response indicating a frequency that can be used by the base station 401 or a response indicating whether or not the frequency requested by the base station 401 can be used. Alternatively, in a case where the frequency requested by the base station 401 cannot be used, the frequency control apparatus 100 may transmit a response including information instructing or suggesting an alternative frequency to the base station 401.

The database apparatus 300 includes a database storing installation environment information regarding a plurality of base stations belonging to each group in units of groups. In the present embodiment, the base stations 401A to 401E belong to the same group (first group). The group can be arbitrarily defined. For example, the first group is a group including a plurality of base stations installed on different floors in a building having a plurality of floors. Alternatively, the first group may be a group including a plurality of base stations installed in a plurality of buildings existing within a certain distance, for example, a plurality of adjacent buildings. Alternatively, the first group may be a group including a plurality of base stations installed in a plurality of adjacent areas. The group is not limited to the above-described examples, and may be a group other than the above-described examples. The database may store the installation environment information for other groups in addition to the first group. The database may store group information indicating to which group each base station belongs. The group information may be managed by the frequency control apparatus 100 instead of the database apparatus 300 or together with the database apparatus 300.

The database may include information regarding the floor where the base stations 401A to 401E are installed as the installation environment information regarding the first group. Furthermore, the database may include information regarding a floor thickness between the floors of the building as the installation environment information regarding the first group. Furthermore, the database may include information regarding thicknesses of outer walls of a plurality of the buildings as the installation environment information regarding the first group. Furthermore, the database may include, as the installation environment information regarding the first group, information regarding a radio interference amount from another base station 401 in the same building or another building, which is measured when a base station 401 is newly installed in the building (reception power, an attenuation amount of propagation power, or the like).

In a case where the three-dimensional determination request is received from the frequency control apparatus 100, the communication control apparatus 200 calculates the use condition (three-dimensional use condition) of the shared band for the base station 401 by using the information of the database of the database apparatus 300. Details of the calculation method will be described later. The communication control apparatus 200 determines one or more frequencies indicated by the three-dimensional use condition as frequencies that can be used by the base station 401 (frequencies allowed to be used). Furthermore, in a case where the frequency the base station 401 requests to use satisfies the three-dimensional use condition (in a case where the frequency matches the frequency indicated by the three-dimensional use condition, that is, in a case where interference does not occur), the communication control apparatus 200 determines that the base station 401 can use the requested frequency. In a case where the frequency the base station 401 requests to use does not satisfy the three-dimensional use condition, the communication control apparatus 200 determines that the requested frequency cannot be used. The communication control apparatus 200 transmits, to the frequency control apparatus 100, a response including a determination result (frequency that can be used or information regarding whether or not the frequency can be used). The frequency that can be used or information regarding whether or not the frequency can be used is an example of parameter information regarding a radio wave that can be used for the base station 401. In a case where it is determined that the frequency requested by the base station 401 cannot be used, the communication control apparatus 200 may determine, as an alternative frequency, a frequency that can be used by the base station 401 among other candidate frequencies in the shared band. In this case, the communication control apparatus 200 may transmit a response including information regarding the alternative frequency to the frequency control apparatus 100. Furthermore, the communication control apparatus 200 may transmit a response including the calculated three-dimensional condition to the frequency control apparatus 100.

Note that in a case where the wireless communication system 550 has a higher priority than the wireless communication systems 501 and 502 (base stations 401A to 401E), the wireless communication systems 501 and 502 are subordinate to the wireless communication system 550 when the shared band is used. That is, in a case where the wireless communication system 550 having a high priority uses the frequency in the shared band (in a case where interference occurs at the frequency), the wireless communication systems 501 and 502 having a low priority cannot use the frequency. In a situation where a base station belonging to any one of the wireless communication systems 501 and 502 uses the frequency first, in a case where the wireless communication system 550 starts using the frequency later, the base station has to stop using the frequency. On the other hand, in a case where the wireless communication system 550 is a wireless communication system having a lower priority than the wireless communication systems 501 and 502, the wireless communication system 550 is subordinate to the wireless communication systems 501 and 502 when the shared band is used.

Hereinafter, the configuration of the communication control apparatus 200 and the configuration of the database apparatus 300 according to the present disclosure will be described in detail.

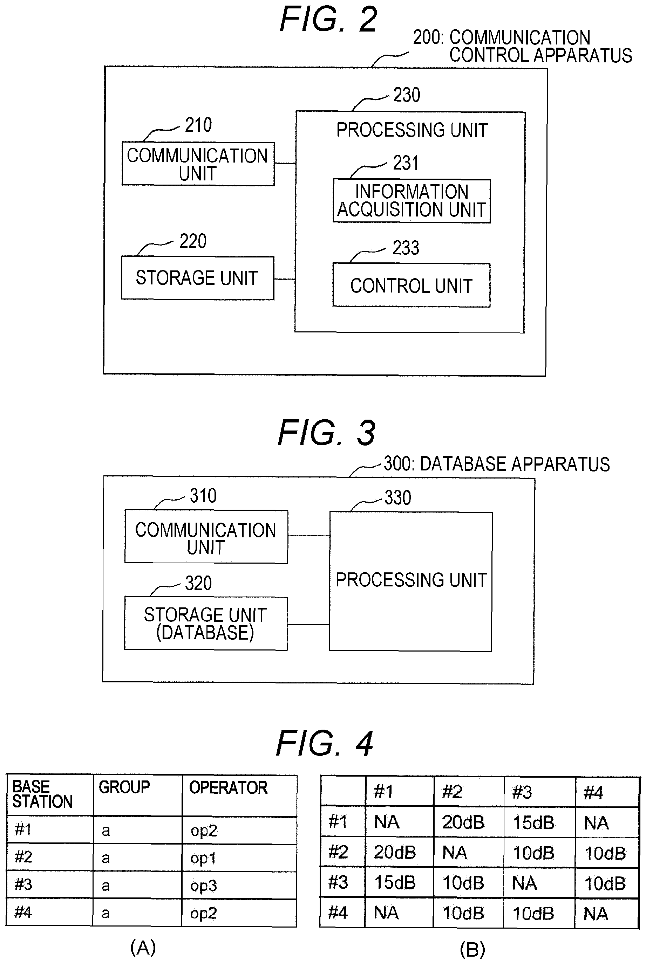

Fig. 2 is a block diagram illustrating an example of a configuration of the communication control apparatus 200 according to the embodiment of the present disclosure. The communication control apparatus 200 includes a communication unit 210, a storage unit 220, and a processing unit 230.

The communication unit 210 transmits information. The communication unit 210 includes a transmission unit that transmits information and a reception unit that receives information. The communication unit 210 includes a communication interface for performing wired or wireless communication. In a case where the wireless communication is performed, the communication unit 210 includes one or more antennas. The communication unit 210 transmits information to another node and receives information from another node. Another node includes, for example, the frequency control apparatus 100 and the database apparatus 300. The communication interface between the frequency control apparatus 100 and the database apparatus 300 may be different or the same. Another node may include the base station.

The storage unit 220 temporarily or permanently stores a program and data for operation of the communication control apparatus 200. The storage unit 220 is a recording medium such as a memory device, a hard disk, or an optical disk. The memory device may be a nonvolatile memory or a volatile memory.

The processing unit 230 provides various functions of the communication control apparatus 200. The processing unit 230 is connected to the communication unit 210 and the storage unit 220. The processing unit 230 includes an information acquisition unit 231 and a control unit 233. Note that the processing unit 230 may further include other elements other than the elements 231 and 233. That is, the processing unit 230 can also perform operations other than the operation of the element 231 and the operation of the element 233.

### [Information Acquisition Unit 231]

The information acquisition unit 231 acquires information regarding the wireless communication system (501, 502, 550) from the frequency control apparatus 100 or the database apparatus 300. Hereinafter, a specific example of information to be acquired will be described.

The information acquisition unit 231 acquires group information regarding any base stations 401 belonging to the wireless communication systems 501 and 502 from the database apparatus 300. Furthermore, the information acquisition unit 231 acquires, from the database apparatus 300, installation environment information regarding the base station 401 and installation environment information regarding another base station 401 belonging to the same group (first group) as that of the base station 401. The information acquisition unit 231 can also be configured to acquire the group information not from the database apparatus 300 but from the frequency control apparatus 100.

The installation environment information regarding the base station 401 and another base station 401 is information indicating an environment in which the base station 401 and another base station 401 are installed, and is used to estimate whether interference occurs between the base station 401 and another base station 401 (whether the same frequency can be allowed). As an example, the installation environment information is an interference power value that the base station 401 is estimated to receive from another base station 401. When the base station 401 is installed, the interference amount received from another installed base station 401 is measured, and the measured value (interference power value) is set in the database. Alternatively, the attenuation amount of power of a radio wave transmitted from another base station 401 and received by the base station 401 is measured, and a value of the measured attenuation amount is set in the database. In this case, the interference amount in the base station 401 can be estimated by subtracting the attenuation amount from the transmission power value of another base station 401. The transmission power values of the base station 401 and another base station 401 may be included in the installation environment information. The transmission power values of the base station 401 and another base station 401 may be managed by the frequency control apparatus 100. By assuming the symmetry of the propagation path between the base station 401 and another base station 401, the attenuation amount from the base station 401 to another base station 401 also can be diverted to the same value, and the interference power value another base station 401 receives from the base station 401 can be similarly estimated.

Furthermore, the installation environment information may include information regarding a building in which the base station 401 and another base station 401 are installed. There may be both a case where the base station 401 and another base station 401 belonging to the same group are installed inside the same building and a case where the base stations are separately disposed in different buildings. The information regarding the building includes, for example, information regarding a floor where the base station is installed, a floor thickness between floors of the building in which the base station is installed, and a structure of the building. Furthermore, the information regarding the building may also include information regarding a thickness of an outer wall of the building. The control unit 233 can determine a three-dimensional use condition of base station 401 (for example, a frequency that can be used by the base station 401 in the shared band and the transmission power value, and the like) by using the information acquired by the information acquisition unit 231. Specifically, the control unit 233 can determine a frequency that can be used by the base station 401 among the frequencies included in the shared band, and can determine whether or not the base station 401 can be allowed to use the frequency requested by the base station 401 (whether or not the frequency interferes with that of another base station 401). The installation environment information is not limited to the above-described examples, and may be information other than the above-described examples.

Furthermore, the information acquisition unit 231 may further acquire another information regarding the wireless communication system from the frequency control apparatus 100 or the database apparatus 300.

For example, the information acquisition unit 231 may acquire information regarding an antenna of a base station belonging to the wireless communication system (antenna-related information). The antenna-related information may include an antenna dimension, polarization information, the number of antenna elements, an interval between antenna elements, an antenna size, an antenna orientation, an applicable transmission mode, and a formable beam pattern.

Furthermore, the information acquisition unit 231 may acquire information regarding a device class of a base station belonging to the wireless communication system. The information regarding the device class may indicate a device class, or may indicate a parameter such as maximum transmission power defined by the device class.

Furthermore, the information acquisition unit 231 may acquire information regarding a priority of the wireless communication system when the shared band is used. The information regarding the priority may indicate a priority.

Furthermore, the information acquisition unit 231 may acquire information regarding a user type of the wireless communication system. The information regarding the user type may indicate a user type. The user type may be a business operator, an individual, a public organization, or the like.

Furthermore, the information acquisition unit 231 may acquire information regarding a system type of the wireless communication system. The information regarding the system type may indicate a system type. The system type may be digital enhanced cordless telecommunications (DECT) or disaster prevention radio.

The information acquisition unit 231 may acquire information other than the above-described information.

For example, the information acquisition unit 231 may receive a three-dimensional determination request for a certain base station 401 from the frequency control apparatus 100 as a timing to acquire the above-described information (group information, installation environment information, other information, and the like). The three-dimensional determination request includes an inquiry of a frequency that can be used by the base station 401 or an inquiry of whether or not the frequency requested from the base station 401 can be used.

### [Control Unit 233]

In a case where a three-dimensional determination request for a certain base station 401 is received, the control unit 233 calculates the use condition (three-dimensional use condition) of the shared band in the group for the base station 401 on the basis of installation environment information or the like of the base station 401 and another base station 401 in the same group.

For example, the three-dimensional use condition includes information (identification information) for identifying a frequency that can be used by the base station 401 in the shared band. Furthermore, the three-dimensional use condition may include a transmission power value (for example, the maximum transmission power value) that can be transmitted by the base station 401 for the frequency. Furthermore, the three-dimensional use condition may include information for specifying a space in which the base station 401 can use the frequency. The space in which the frequency can be used is a space in which interfere with another base station does not occur even when a reception power of a signal the base station 401 transmits by using the frequency is equal to or greater than a predetermined power. The frequency that can be used, the transmission power value, and information for specifying the space in which the frequency can be used are examples of parameter information regarding a radio wave the base station 401 can use.

On the basis of the calculated three-dimensional use condition, the control unit 233 can determine whether to use the frequency usable by the base station 401 or the frequency requested by the base station 401. Furthermore, in a case where the frequency (first frequency) requested by the base station 401 cannot be used, the control unit 233 may determine a frequency (third frequency) that can be used by the base station 401 in the group from among other frequencies as candidates in the shared band. The frequency that can be used, whether or not the requested frequency can be used, or the frequency determined from the candidates is an example of the parameter information regarding the radio wave that can be used by the base station 401. The control unit 233 transmits a response including a determination result to the frequency control apparatus 100 via the communication unit 210. The control unit 233 may transmit information indicating the three-dimensional use condition to the frequency control apparatus 100.

Fig. 3 is a block diagram illustrating an example of the database apparatus 300 according to the embodiment of the present disclosure. The database apparatus 300 includes a communication unit 310, a storage unit 320, and a processing unit 330.

The communication unit 310 transmits information. The communication unit 310 includes a transmission unit that transmits information and a reception unit that receives information. The communication unit 310 includes a communication interface for performing wired or wireless communication. In a case where the wireless communication is performed, the communication unit 310 includes one or more antennas. The communication unit 310 transmits information to another node and receives information from another node. For example, another node includes the communication control apparatus 200 or a terminal. The communication interface with the communication control apparatus 200, and the communication interface with the terminal may be different or the same.

For example, the communication unit 310 receives a data write request or a data read request to the storage unit 320 from the communication control apparatus 200 or another device (for example, an operation terminal or an input device). Furthermore, the communication unit 310 transmits the processing result for the write request to the communication control apparatus 200 or the another device, or transmits the read data to the request source device.

The processing unit 330 is connected to the communication unit 310 and the storage unit 320. Information is exchanged with the storage unit 320 according to the request content (write or read request) received by the communication unit 310.

The storage unit 320 is a database that temporarily or permanently stores data. The storage unit 320 is a recording medium such as a memory device, a hard disk, or an optical disk. The memory device may be a nonvolatile memory or a volatile memory.

For example, the storage unit 320 stores information regarding a group (group information) to which each base station 401 belongs. The group may be, for example, a group including a plurality of base stations belonging to the same building or a plurality of adjacent buildings. A plurality of pieces of the group information may be stored.

Furthermore, the storage unit 320 stores installation environment information (installation environment information) of each base station belonging to the same group (first group). Details of the installation environment information are as described above.

Hereinafter, specific examples of the configuration and operation in the present embodiment will be described.

### (First Specific Example)

A group in the first specific example includes a plurality of base stations (wireless communication apparatuses) belonging to a plurality of wireless communication systems having an equal priority. A plurality of the wireless communication systems is operated by different operators. For example, a plurality of the base stations may be disposed at different arbitrary heights. For example, a plurality of the base stations may be disposed at different heights in a certain area. As a specific example, a plurality of the base stations may be disposed on roofs of a plurality of houses having different heights, or may be disposed at different heights on one or a plurality of utility poles.

Fig. 4(A) and Fig. 4(B) illustrate examples of databases (tables) stored in the database apparatus 300.

The table of Fig. 4(A) includes "Base station", "Group", and "Operator". The "Base station" is an identifier of an installed base station. The "Group" is an identifier of a group to which the base station belongs. The "Operator" is an identifier of an operator who operates the base station.

The table of Fig. 4(B) illustrates installation environment information of each base station. The attenuation amount of the power of the radio wave propagating between the base stations is included. An attenuation amount of radio wave power from Base station #1 to Base station #2 or the attenuation amount of radio wave power from Base station #2 to Base station #1 is 20 dB. Since the same base stations do not need to consider interference, the corresponding field is set to Not Applicable (NA). Furthermore, since the base stations operated by the same operator do not need to consider mutual interference (since the operator can control the interference by himself/herself), the corresponding field is set to Not Applicable (NA). The interference may be considered between the base stations operated by the same operator, and in this case, a value is only required to be stored in an NA field.

### (Example of Method for Writing to Database Apparatus 300)

Writing of the base station information to the database apparatus 300 is performed for each base station, for example, when a new base station is installed. The writing is performed by using a device (for example, an operation terminal, an input device, or the like) with which a person in charge agreed between the operators who operate the base stations constituting the same group can perform wired or wireless communication with the database apparatus 300. The person in charge who performs the writing may be, for example, a person qualified as a certified professional installer (CPI) in a radio wave sharing law in the United States as described in Non-Patent Document 1. The writing of information regarding a newly installed base station may be requested to the person qualified as the CPI.

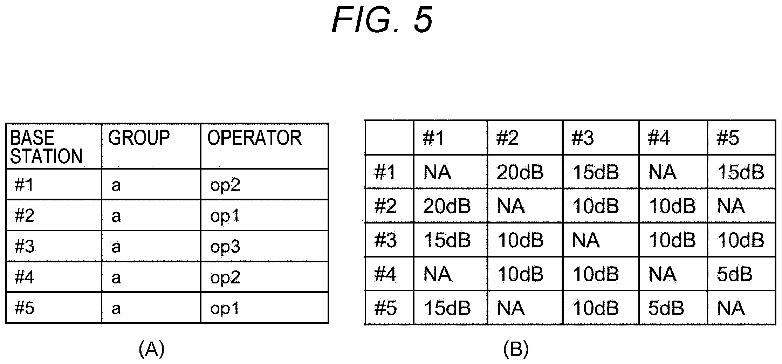

Fig. 5 illustrates an example in which information regarding new Base station #5 belonging to the same group (group a) as that of Base station #1 to Base station #4 is added to the tables of Fig. 4(A) and Fig. 4(B).

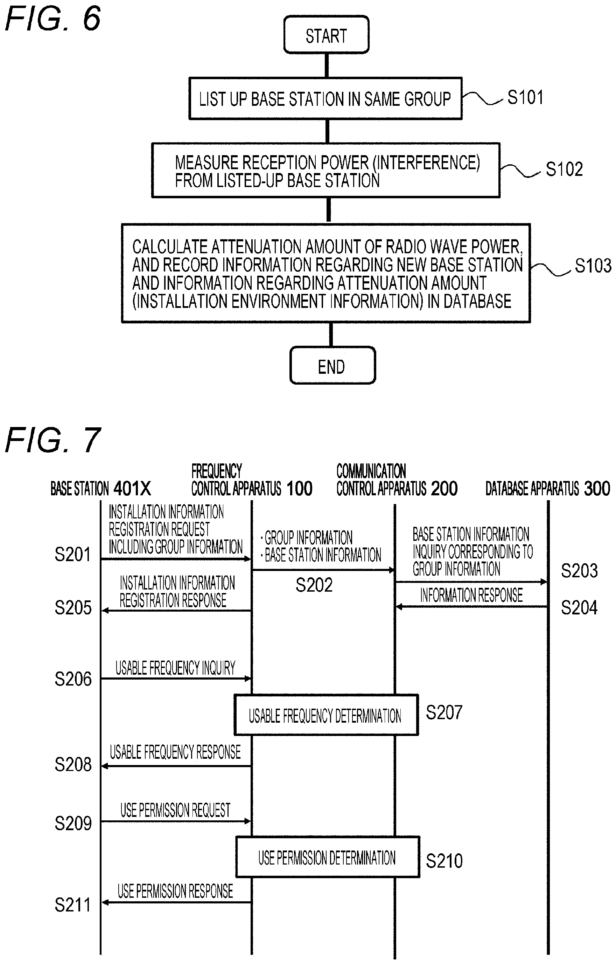

Fig. 6 is a flowchart illustrating an example of a procedure performed when a base station (referred to as a "base station 401X") is newly installed. For example, the base station 401X corresponds to the first wireless communication apparatus according to the present disclosure. The installer first acquires information regarding another base station belonging to the same group as that of the newly installed base station 401X from the database apparatus 300, and lists up the acquired information regarding the base station (S101). The listed-up base station is a base station that requires interference measurement with respect to the base station 401X. At the time of listing up, a base station operated by the same operator as that of the base station 401X may not be listed up. Information regarding the base station 401X (for example, an identifier of a group to which the base station 401X belongs) may be input to the database apparatus 300, and the database apparatus 300 may list up another base station belonging to the same group as that of the base station 401X on the basis of the input information, and output the list. Alternatively, an installer of the base station may manually create a list of the base stations.

Subsequently, the installer measures an interference amount (reception power value) of a radio wave from the listed-up base station, for example, at a place where the base station 401X is installed (S102). The measurement of the reception power value may be performed by the base station 401X, or may be performed by a measurement device provided separately from the base station 401X at the installation place of the base station 401X. The measurement device may be held by the installer, and the measurement may be performed at the installation place of the base station 401X.

A difference between the transmission power value of the listed-up base station and the reception power value of the base station 401 is calculated as an attenuation amount (installation environment information) of radio wave power, and is recorded in the database apparatus 300 (S103). The attenuation amount may be calculated by the base station 401X or the measurement device, and may be calculated by another device.

The measurement of the reception power value may be performed at a place where the reception power from another base station to be measured is assumed to be the largest in a cell of the base station 401X. In a case where the place is not suitable for the measurement, the measurement may be performed at another place where the measurement can be performed, and the maximum reception power value may be estimated by a method of adding a margin.

Fig. 7 illustrates an example of a flow until information regarding a newly installed base station (referred to as "base station 401X") is recorded in the database apparatus 300, and then the base station 401X obtains permission to use the frequency included in the shared band to start transmission. For example, the base station 401X corresponds to the first wireless communication apparatus according to the present disclosure.

The newly installed base station 401X first transmits, to the frequency control apparatus 100, a request (installation information registration request) for registering the base station 401X in the database apparatus 300 (S201). The base station 401X makes the installation information registration request include information regarding the base station 401X (information regarding the base station, group information, and the like). The information regarding the base station includes, for example, an identifier of the base station, an attenuation amount of a radio wave received from another base station, which is measured in a procedure of Fig. 6. The frequency control apparatus 100 that has received the installation information registration request transmits registration information including information regarding the base station 401X to the communication control apparatus 200 (S202).

The communication control apparatus 200 transmits a base station information inquiry based on the group information of the base station 401X to the database apparatus 300 (S203). The base station information inquiry includes a registration instruction of the base station 401X. The database apparatus 300 that has received the inquiry registers the information regarding the base station 401X in the database (S203). Furthermore, the database apparatus 300 transmits, to the communication control apparatus 200, a registration completion notification from the database apparatus 300 and information regarding another base station of the group to which the base station 401X belongs (S204). The information regarding another base station includes installation environment information regarding another base station, and an identifier of the base station. The communication control apparatus 200 notifies the frequency control apparatus 100 that the registration of the base station 401X is completed, and holds information regarding another base station in the internal storage unit 220. The frequency control apparatus 100 transmits, to the base station 401X, a response (installation information registration response) indicating that the registration with respect to the database apparatus 300 is completed (S205). Note that the frequency control apparatus 100 may be configured to transmit an installation information registration response to the base station 401X when receiving the installation information registration request.

The base station 401X transmits an inquiry of the frequency that can be used by the base station 401X (usable frequency inquiry) to the frequency control apparatus 100 (S206). The frequency that can be used by the base station 401X is determined by usable frequency determination processing (to be described later) performed by the frequency control apparatus 100 and the communication control apparatus 200 (S207). The frequency control apparatus 100 transmits a response indicating a usable frequency (usable frequency response) to the base station 401X (S208). The base station 401X selects a frequency requested to be used from among the usable frequencies.

The base station 401X transmits, to the frequency control apparatus 100, a use permission request indicating the frequency requested to be used (S209). Whether or not the requested frequency can be used is determined by use permission determination (to be described later) performed by the frequency control apparatus 100 and the communication control apparatus 200 (S210). In a case where the use of the requested frequency is allowed, the frequency control apparatus 100 transmits a response (use permission response) including the use permission to the base station 401X (S211). In a case where the use of the requested frequency is not allowed, the frequency control apparatus 100 transmits a response (non-usable response) including non-transmission to the base station 401X. The base station 401X can start transmission when the use of the frequency is allowed.

### [Detailed Example of Usable Frequency Determination Processing in Step S207 of Fig. 7]

When the frequency control apparatus 100 receives a usable frequency inquiry (radio wave use request) from the base station 401X, the frequency control apparatus 100 obtains a state in which all the base stations belonging to one or more other groups different from that of the base station 401X use the shared band. Furthermore, the frequency control apparatus 100 obtains a state in which the wireless communication system having a higher priority uses the shared band. The frequency control apparatus 100 calculates a usable frequency (two-dimensional use condition) for the base station 401X with respect to a base station or a system other than the group to which the base station 401X belongs on the basis of the obtained use state. The calculated usable frequency is referred to as a "frequency fa". The number of frequencies fa is one or more.

The frequency control apparatus 100 transmits, to the communication control apparatus 200, an inquiry of the frequency that can be used by the base station 401X (usable frequency inquiry) in the group to which the base station 401X belongs among the frequencies fa. The usable frequency inquiry or the usable frequency inquiry (radio wave use request) transmitted by the above-described base station 401X corresponds to an example of a first request related to the radio wave use of the base station 401X.

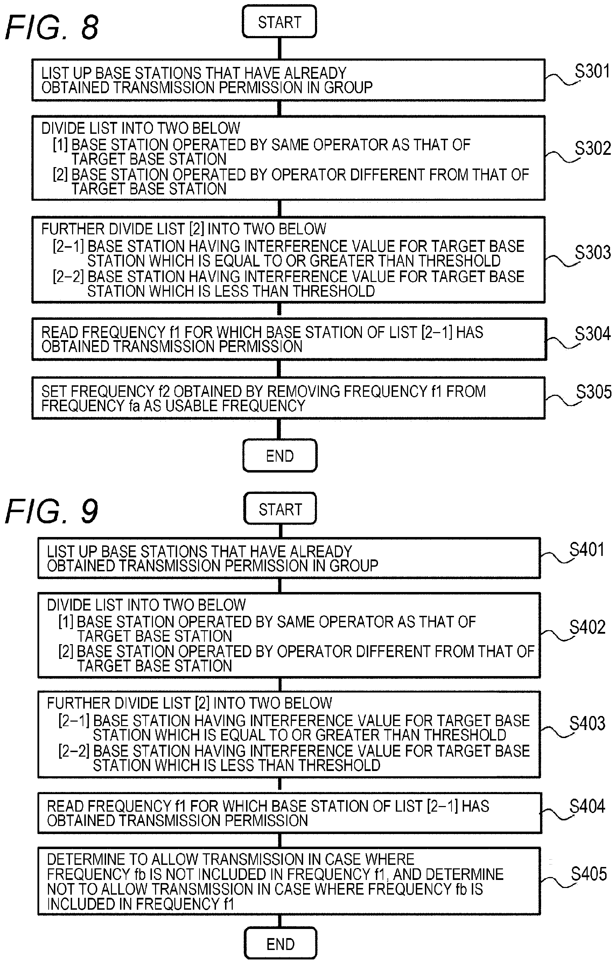

The communication control apparatus 200 calculates a frequency (referred to as "frequency f2") and the like that can be used by the base station 401X in the group according to the flow of Fig. 8 (to be described later) with respect to the base station 401X, and transmits a response indicating the calculated frequency f2 to the frequency control apparatus 100. Information other than the frequency, for example, a transmission power value and information for specifying a usable space may be calculated as parameter information regarding a radio wave that can be used by the base station 401X.

The frequency control apparatus 100 transmits a response (usable frequency response) indicating the frequency f2 that can be used by the base station 401X in the group on the basis of the response received from the communication control apparatus 200.

Fig. 8 is a flowchart illustrating an example of processing in which the communication control apparatus 200 calculates a frequency that can be used by the base station 401X in the group. The communication control apparatus 200 lists up the base station that have already obtained the use permission (use permission of the frequency included in the shared band) in the group to which the base station 401X belongs (S301).

The communication control apparatus 200 divides the listed-up base station group into two lists, and sets List [1] and List [2], respectively (S302).

List [1] A base station operated by the same operator as that of a target base station (base station 401X)

List [2] A base station operated by a different operator from that of the target base station (base station 401X)

The communication control apparatus 200 further divides List [2] into two lists, and sets List [2-1] and List [2-2], respectively (S303).

List [2-1] A base station having a radio wave interference value for the target base station (base station 401X) which is equal to or greater than a threshold

List [2-2] A base station having a radio wave interference value for the target base station (base station 401X) which is less than a threshold

The communication control apparatus 200 specifies a frequency (referred to as "frequency f1") for which the base station included in List [2-1] has obtained the use permission (S304). The frequency f1 corresponds to, for example, a frequency (second frequency) used by another base station in the same group as that of the base station 401X. The communication control apparatus 200 acquires information regarding the frequency f1, for example, from the frequency control apparatus 100. The number of frequencies f1 is one or more.

The communication control apparatus 200 sets a frequency obtained by removing the frequency f1 from the frequency fa as a frequency f2, and sets the frequency f2 as a frequency that can be used by the base station 401X (S305). The number of frequencies f2 is one or more. The frequency f2 may be the same frequency as the frequency used by the base station included in List [1] or List [2-2]. In a case where the frequency f2 is the same frequency as that of the base station included in List [1], the operator may perform transmission power control so as to avoid interference between the base stations, or the base station may avoid interference by time division communication or spatial multiplex communication. The base stations may autonomously perform transmission power control, time division communication control, or spatial multiplex communication control.

As a modification example, in a case where interference with the base station included in List [2-1] can be avoided by transmission power control or antenna control, the communication control apparatus 200 may not remove the frequency at which the interference can be avoided from the frequency fa. In this case, the communication control apparatus 200 calculates a transmission power value or antenna-related information (such as beamforming parameter) with which the interference can be avoided.

### [Detailed Example of Use Permission Determination Processing in Step S210 of Fig. 7]

The frequency control apparatus 100 receives a use permission request (radio wave use request) including a frequency (referred to as "frequency fb") for which the use permission is requested from the base station 401X. The frequency fb is a frequency selected from the frequencies f2. The frequency control apparatus 100 obtains a state in which all the base stations belonging to one or more other groups different from that of the base station 401X use the shared band. Furthermore, the frequency control apparatus 100 obtains a state in which the wireless communication system having a higher priority uses the shared band. The frequency control apparatus 100 calculates a frequency (two-dimensional use condition) that can be used by the base station 401X with respect to a base station or a system other than the group to which the base station 401X belongs on the basis of the obtained use state. In a case where the frequency fb is not included in the usable frequency, the frequency control apparatus 100 determines not to allow the use of the frequency fb at this time, and transmits a non-permission response to the base station 401X.

In a case where the frequency fb is included in the usable frequency, the frequency control apparatus 100 transmits, to the communication control apparatus 200, a use permission determination request for the use of the frequency fb in the group. The use permission determination request or the use permission request (radio wave use request) transmitted by the above-described base station 401X corresponds to an example of the first request related to the radio wave use of the base station 401X.

The communication control apparatus 200 performs a use permission determination for the use of the frequency fb in the group according to the flow of Fig. 9 (to be described later), and transmits a response including a determination result to the frequency control apparatus 100.

The frequency control apparatus 100 transmits, to the base station 401X, a response including whether or not the frequency fb can be used on the basis of the received response.

Fig. 9 is a flowchart illustrating an example of processing in which the communication control apparatus 200 determines whether or not the frequency fb requested by the base station 401X can be used in the group. Steps S401 to S404 are the same as Steps S301 to S304 in Fig. 8. That is, the communication control apparatus 200 lists up the base station that have already obtained the use permission (use permission of the frequency included in the shared band) in the group to which the base station 401X belongs (S401).

The communication control apparatus 200 divides the listed-up base station group into two lists, and sets List [1] and List [2], respectively (S402).

List [1] A base station operated by the same operator as that of a target base station (base station 401X)

List [2] A base station operated by a different operator from that of the target base station (base station 401X)

The communication control apparatus 200 further divides List [2] into two lists, and sets List [2-1] and List [2-2], respectively (S403).

List [2-1] A base station having a radio wave interference value for the target base station (base station 401X) which is equal to or greater than a threshold

List [2-2] A base station having a radio wave interference value for the target base station (base station 401X) which is less than a threshold

The communication control apparatus 200 reads the frequency (frequency f1) for which the base station included in List [2-1] has obtained the use permission (S404).

In a case where the frequency fb is included in the frequency f1 (that is, in a case where the frequency fb matches any of the frequencies f1, that is, in a case where interference occurs), the communication control apparatus 200 determines that the frequency f1 cannot be used (S405). In a case where the frequency fb is not included in the frequency f1 (that is, in a case where the frequency fb does not match any of the frequencies f1, that is, in a case where interference does not occur), the communication control apparatus 200 determines that the frequency fb can be used (S405).

### (Second Specific Example)

Hereinafter, the second specific example of the present embodiment will be described. The description as in the first specific example will be appropriately omitted. The group in the second specific example includes a plurality of base stations (wireless communication apparatuses) belonging to the wireless communication systems having an equal priority in a building. A plurality of the wireless communication systems is operated by different operators.

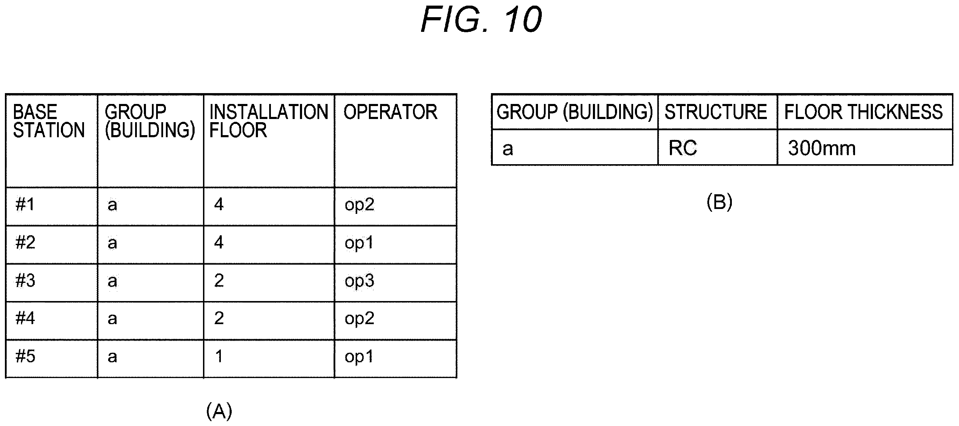

Fig. 10(A) and Fig. 10(B) illustrate examples of databases (tables) stored in the database apparatus 300.

The table of Fig. 10(A) includes "Base station", "Group", "Installation floor", and "Operator". The "Base station" is an identifier of an installed base station. The "Group" is an identifier of a group (building) to which the base station belongs. The "installation floor" is information regarding a floor where the base station is installed. The "Operator" is an identifier of an operator who operates the base station. The installation floor corresponds to an example of installation environment information for estimating radio wave interference between the base stations.

The table of Fig. 10(B) indicates information regarding a structure and a floor thickness as information regarding the building in which a base station group belonging to the group is installed. The building information (information regarding the structure and the floor thickness) is an example of installation environment information for estimating radio wave interference between the base stations.

### (Example of Method for Writing to Database Apparatus 300)

A person in charge of writing to the database apparatus 300 (for example, a person qualified as the CPI) first records the information regarding the structure and floor thickness of the building in the database apparatus 300 before installing the first base station belonging to the group. Subsequently, when a new base station is installed, base station information including the installation floor of the base station is recorded in the database apparatus 300.

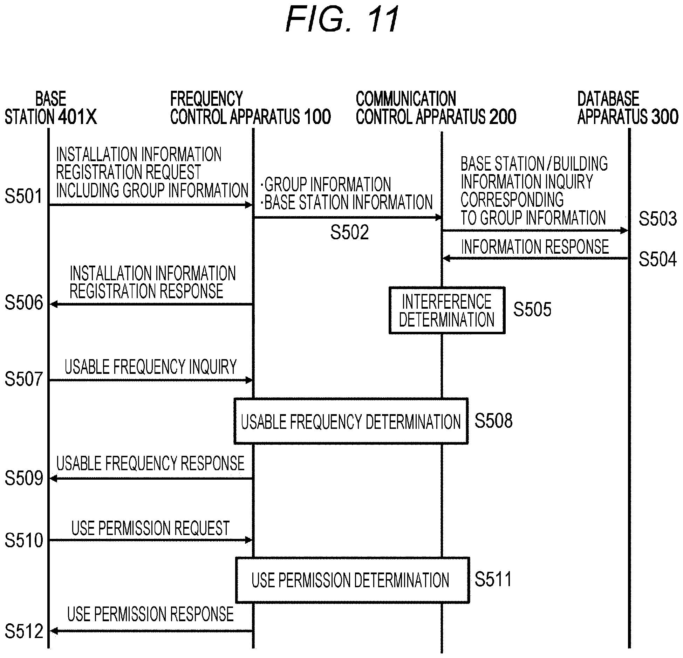

Fig. 11 illustrates an example of a flow until information regarding a new base station (referred to as "base station 401X") is recorded in the database apparatus 300, and then the base station 401X obtains permission to use the frequency included in the shared band to start transmission. For example, the base station 401X corresponds to the first wireless communication apparatus according to the present disclosure.

The newly installed base station 401X first transmits, to the frequency control apparatus 100, a request (installation information registration request) for registering the base station 401X in the database apparatus 300 (S501). The base station 401X makes the installation information registration request include information regarding the base station 401X (an identifier of the base station 401X, group information, and the like). The frequency control apparatus 100 that has received the installation information registration request transmits registration information including information regarding the base station 401X to the communication control apparatus 200 (S502).

The communication control apparatus 200 transmits a base station/building information inquiry including information regarding the base station 401X to the database apparatus 300 (S503). The base station/building information inquiry includes a registration instruction of the base station 401X. The database apparatus 300 registers the information regarding the base station 401X (S503). The database apparatus 300 transmits, to the communication control apparatus 200, a notification of registration completion, and information regarding another base station in the same group and building information (here, building information such as a structure and a floor thickness) (S504). The communication control apparatus 200 performs interference determination as to whether or not interference occurs between the base station 401X and another base station (S505). Details of the calculation of the interference determination will be described later. The communication control apparatus 200 notifies the frequency control apparatus 100 that the registration of the base station 401X is completed, and the frequency control apparatus 100 transmits, to the base station 401X, a response (installation information registration response) indicating that the registration with respect to the database apparatus 300 is completed (S506).

The base station 401X transmits an inquiry of the frequency that can be used by the base station 401X (usable frequency inquiry or a radio wave use request) to the frequency control apparatus 100 (S507). The frequency that can be used by the base station 401X is determined by usable frequency determination processing (to be described later) performed by the frequency control apparatus 100 and the communication control apparatus 200 (S508). The frequency control apparatus 100 transmits a response indicating a usable frequency (usable frequency response) to the base station 401X (S509). The base station 401X selects a frequency requested to be used from among the usable frequencies.

The base station 401X transmits, to the frequency control apparatus 100, a use permission request indicating the frequency requested to be used (S510). The use permission request or the above-described usable frequency inquiry corresponds to an example of the first request related to radio wave use of the base station 401X. In processing to be described later, which is performed by the frequency control apparatus 100 and the communication control apparatus 200, whether or not the requested frequency can be used is determined by use permission determination (to be described later) performed by the frequency control apparatus 100 and the communication control apparatus 200 (S511). In a case where the use of the requested frequency is allowed, the frequency control apparatus 100 transmits a response (use permission response) including the use permission to the base station 401X (S512). In a case where the use of the requested frequency is not allowed, the frequency control apparatus 100 transmits a response (non-usable response) including non-transmission to the base station 401X. The base station 401X can start transmission when the use of the frequency is allowed.

### [Detailed Example of Interference Amount Determination Processing in Step S505 of Fig. 11]

By using the building information (a structure, a floor thickness, and the like) acquired from the database apparatus 300, the processing unit 230 of the communication control apparatus 200 obtains a floor number difference at which another base station does not interfere with the base station 401X, for example, by applying the following Rule 1.

### [Rule 1]

In a case where a floor structure includes a reinforced concrete (RC) and the total floor thickness between the base station 401X and another base station is 450 mm or less, the floor number difference at which the base station 401X and another base station do not interfere with each other is determined to be three. That is, when the floor number difference is three or more, it is determined not to interfere with each other. On the other hand, in a case where the total floor thickness is greater than 450 mm, the floor number difference at which interfere does not occur between the base stations is determined to be two. That is, when the floor number difference is two or more, it is determined not to interfere with each other.

For example, in a case where the floor number difference at which the interference does not occur is three and the base station 401X is installed on the first floor, it can be considered that the base station 401X does not interfere with the base station installed on the fourth floor. Therefore, there is no problem even when the base station 401X uses the same frequency as the base station installed on the fourth floor.

For example, information regarding the calculated floor number difference may be stored in the storage unit 220 of the communication control apparatus 200. Alternatively, the information may be stored in the storage unit 320 (database) of the database apparatus 300.

### [Detailed Example of Usable Frequency Determination Processing in Step S508 of Fig. 11]

When the frequency control apparatus 100 receives a usable frequency inquiry (radio wave use request) from the base station 401X, the frequency control apparatus 100 obtains a state in which all the base stations belonging to one or more other groups different from that of the base station 401X use the shared band. Furthermore, the frequency control apparatus 100 obtains a state in which the wireless communication system having a higher priority uses the shared band. The frequency control apparatus 100 calculates a usable frequency (two-dimensional use condition) for the base station 401X with respect to a base station or a system other than the group to which the base station 401X belongs on the basis of the obtained use state. The calculated usable frequency is referred to as a "frequency fa". The number of frequencies fa is one or more.

The frequency control apparatus 100 transmits, to the communication control apparatus 200, an inquiry of the frequency that can be used by the base station 401X in the group to which the base station 401X belongs among the frequencies fa. The inquiry or the above-described usable frequency inquiry corresponds to the first request related to radio wave use of the base station 401X.

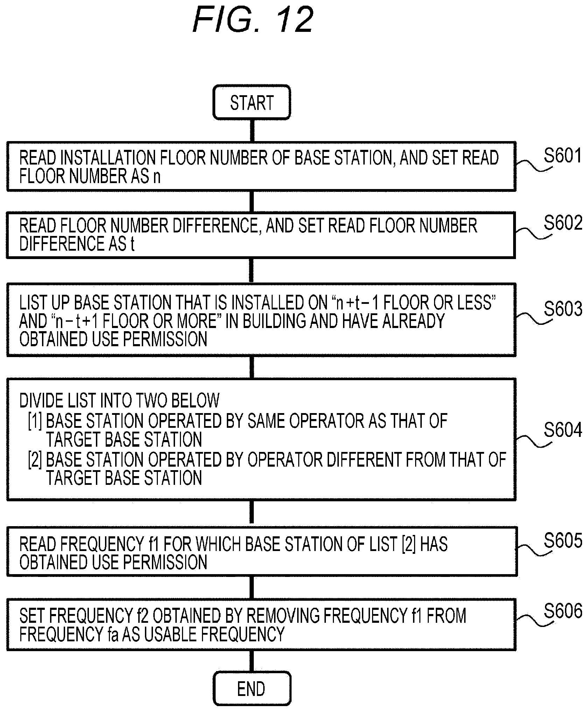

The communication control apparatus 200 calculates a frequency (referred to as "frequency f2") that can be used by the base station 401X in the group according to the flow of Fig. 12 (to be described later) with respect to the base station 401X, and transmits a response indicating the calculated frequency f2 to the frequency control apparatus 100.

The frequency control apparatus 100 transmits a response (usable frequency response) indicating the frequency f2 that can be used by the base station 401X in the group on the basis of the response received from the communication control apparatus 200.

Fig. 12 is a flowchart illustrating an example of processing in which the communication control apparatus 200 calculates a frequency that can be used by the base station 401X in the group. The communication control apparatus 200 reads information regarding the installation floor number of the base station 401X from the storage unit 220 or the database apparatus 300, and sets the floor number indicated by the read information as n (S601). Furthermore, the communication control apparatus 200 reads information regarding a floor number difference at which the interference with the base station 401X does not occur from the storage unit 220 or the database apparatus 300, and sets the read floor number difference as t (S602).

The communication control apparatus 200 lists up the base station that is installed on n+t-1 floor or less and n-t+1 floor or more in the building and have already obtained the use permission (use permission of the frequency included in the shared band) in the same group (S603). For example, when the installation floor n is four and the floor number difference t is two, among the base stations installed on the fifth floor or less and the third floor or more in the building, the base station that have obtained use permission of the frequency included in the shared band is listed up.

The communication control apparatus 200 divides the listed-up base station group into two lists, and sets List [1] and List [2], respectively (S604).

List [1] A base station operated by the same operator as that of a target base station (base station 401X)

List [2] A base station operated by a different operator from that of the target base station (base station 401X)

The communication control apparatus 200 reads a frequency (referred to as "frequency f1") for which the base station included in List [2] has obtained the use permission (S605). The communication control apparatus 200 acquires information regarding the frequency for which the base station has obtained the use permission, for example, from the frequency control apparatus 100. The number of frequencies f1 is one or more.

The communication control apparatus 200 sets a frequency obtained by removing the frequency f1 from the frequency fa (frequency allowed under the two-dimensional use condition) as a frequency f2, and sets the frequency f2 as a frequency that can be used by the base station 401X (S606). The number of frequencies f2 is one or more. The frequency f2 may be the same frequency as the frequency used by the base station included in List [1] or List [2-2]. In a case where the frequency f2 is the same frequency as that of the base station included in List [1], the operator may perform transmission power control so as not to occur interference between the base stations, or the base station may avoid interference by time division communication or spatial multiplex communication. The base stations may autonomously perform transmission power control, time division communication control, or spatial multiplex communication control.

As a modification example, in a case where interference with the base station included in List [2-1] can be avoided by transmission power control or antenna control, the communication control apparatus 200 may not remove the frequency at which the interference can be avoided from the frequency fa. In this case, the communication control apparatus 200 calculates a transmission power value or antenna-related information (such as beamforming parameter) with which the interference can be avoided.

### [Detailed Example of Use Permission Determination Processing in Step S511 of Fig. 11]

The frequency control apparatus 100 receives a use permission request (radio wave use request) including a frequency (referred to as "frequency fb") for which the use permission is requested from the base station 401X. The frequency fb is a frequency selected from the frequencies f2. The frequency control apparatus 100 obtains a state in which all the base stations belonging to one or more other groups different from that of the base station 401X use the shared band. Furthermore, the frequency control apparatus 100 obtains a state in which the wireless communication system having a higher priority uses the shared band. The frequency control apparatus 100 calculates a frequency (two-dimensional use condition) that can be used by the base station 401X with respect to a base station or a system other than the group to which the base station 401X belongs on the basis of the obtained use state. In a case where the frequency fb is not included in the usable frequency, the frequency control apparatus 100 determines not to allow the use of the frequency fb at this time, and transmits a non-permission response to the base station 401X.

In a case where the frequency fb is included in the usable frequency, the frequency control apparatus 100 transmits, to the communication control apparatus 200, a use permission determination request for the use of the frequency fb in the group. The use permission determination request or the above-described use permission request corresponds to the first request related to radio wave use of the base station 401X.

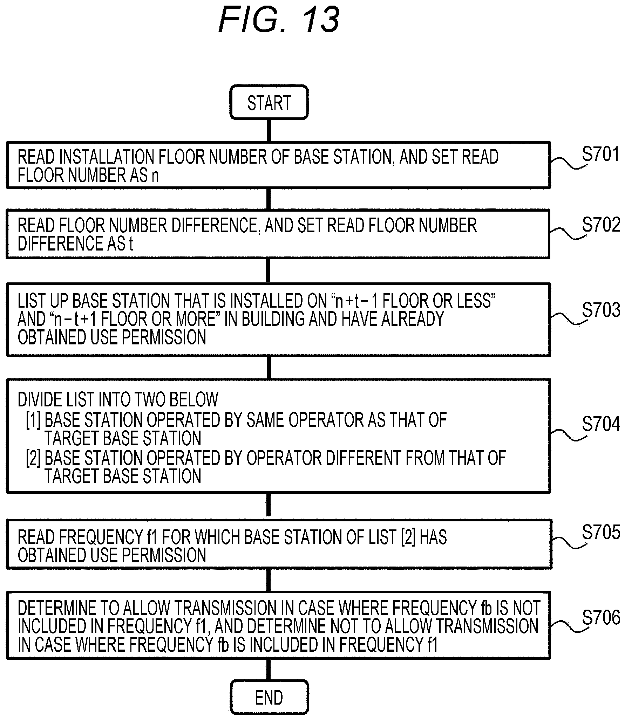

The communication control apparatus 200 performs a use permission determination for the use of the frequency fb in the group according to the flow of Fig. 13 (to be described later), and transmits a response including a determination result to the frequency control apparatus 100.

The frequency control apparatus 100 transmits, to the base station 401X, a response including whether or not the frequency fb can be used on the basis of the received response.

Fig. 13 is a flowchart illustrating an example of processing in which the communication control apparatus 200 determines whether or not the frequency fb requested by the base station 401X can be used in the group. Steps S701 to S705 are the same as Steps S601 to S605 in Fig. 12. That is, the communication control apparatus 200 reads information regarding the installation floor number of the base station 401X, and sets the floor number indicated by the read information as n (S701). The communication control apparatus 200 reads information regarding a floor number difference at which the interference with the base station 401X does not occur from the storage unit 220 or the database apparatus 300, and sets the read floor number difference as t (S702).

The communication control apparatus 200 lists up the base station that is installed on n+t-1 floor or less and n-t+1 floor or more in the building and have already obtained the use permission (use permission of the frequency included in the shared band) in the same group (S703).

The communication control apparatus 200 divides the listed-up base station group into two lists, and sets List [1] and List [2], respectively (S704).

List [1] A base station operated by the same operator as that of a target base station (base station 401X)

List [2] A base station operated by a different operator from that of the target base station (base station 401X)

The communication control apparatus 200 reads a frequency (referred to as a frequency f1) for which the base station included in List [2] has obtained the use permission (S705). The number of frequencies f1 is one or more.

In a case where the frequency fb is included in the frequency f1 (in a case where the frequency fb matches any of the frequencies f1, that is, in a case where interference occurs), the communication control apparatus 200 determines that the frequency f1 cannot be used (S706). In a case where the frequency fb is not included in the frequency f1 (in a case where the frequency fb does not match any of the frequencies f1, that is, in a case where interference does not occur), the communication control apparatus 200 determines that the frequency f1 can be used (S706).

### (Third Specific Example)

Hereinafter, the third specific example of the present embodiment will be described. The description as in the first specific example and the second specific example will be appropriately omitted. The group in the second specific example includes a plurality of base stations installed in one building. In the third specific example, a plurality of the base stations distributed and disposed in a plurality of buildings existing at a short distance is set as one group. A plurality of the base stations in the group belongs to wireless communication systems operated by different operators and having an equal priority. A plurality of the buildings within the short distance may be, for example, a plurality of buildings within a certain distance range or a plurality of buildings designated by the administrator. In the following description, a plurality of adjacent buildings is assumed as a plurality of buildings existing at a short distance. The "Adjacent" means that the buildings do not need to be in physical contact, and are sufficiently close to each other.

A plurality of the buildings may be vertically adjacent to each other like above the ground and below the ground, or may be horizontally adjacent to each other. Alternatively, a plurality of the buildings may be vertically adjacent and horizontally adjacent.

### (Case 1) A case where buildings are vertically adjacent to each other

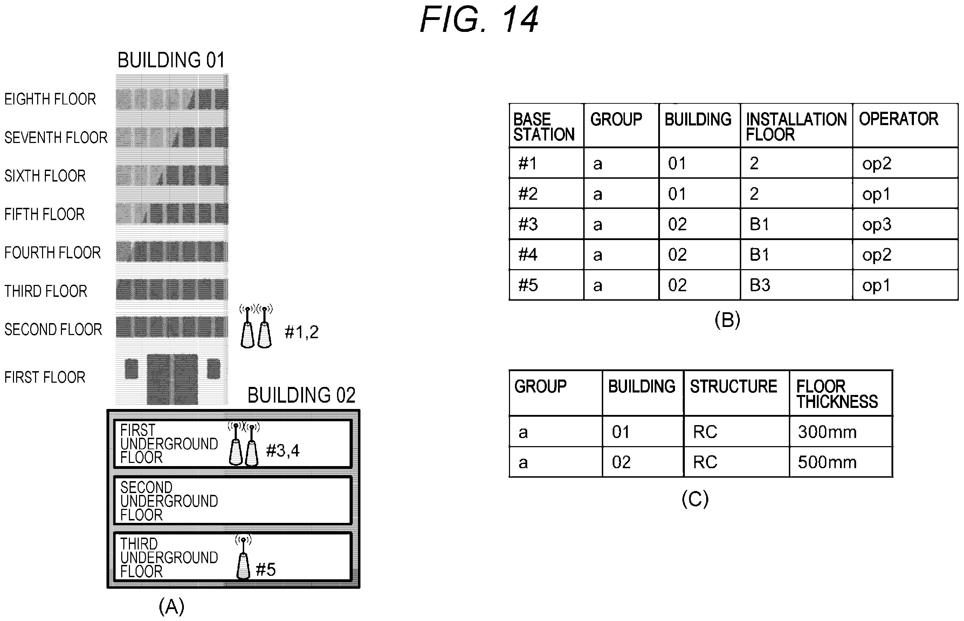

Fig. 14(A) illustrates an installation image example in which two buildings (Building 01, Building 02) are vertically adjacent to each other. Fig. 14(B) and Fig. 14(C) illustrate examples of databases (tables) stored in the database apparatus 300.

The table of Fig. 14(B) illustrates an example of information regarding the base station, and includes "Base station", "Group", "Building", "Installation floor", and "operator". The "Building" is an identifier of the building in which the base station is installed. The other items are the same as those in the second specific example. The building and the installation floor correspond to examples of installation environment information for estimating radio wave interference between the base stations. In a case where the installation floor is underground, "B" indicates underground. Instead of "B", other symbols, for example, "-" ("-" represents minus), may be used.

The table of Fig. 14(C) illustrates an example of the structure information of the building, and Building and Structure including "Group", "Building", "Structure", and "Floor thickness" correspond to examples of the installation environment information for estimating the radio wave interference between the base stations.

### (Case 2) A case where buildings are horizontally adjacent to each other

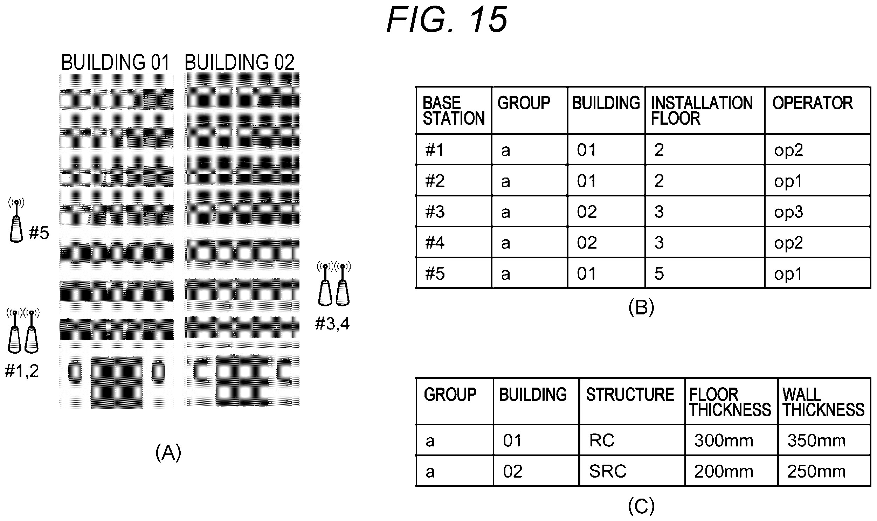

Fig. 15(A) illustrates an installation image example in which two buildings (Building 01, Building 02) are horizontally adjacent to each other. Fig. 15(B) and Fig. 15(C) illustrate examples of databases (tables) stored in the database apparatus 300. The meanings of the items in the database are the same as those in Fig. 14(B) and Fig. 14(C) except that "Wall thickness" is added to the table in Fig. 15(C). The "Wall thickness" is the thickness of the outer wall of the building.

### (Case 3) Combination of Case 1 and Case 2

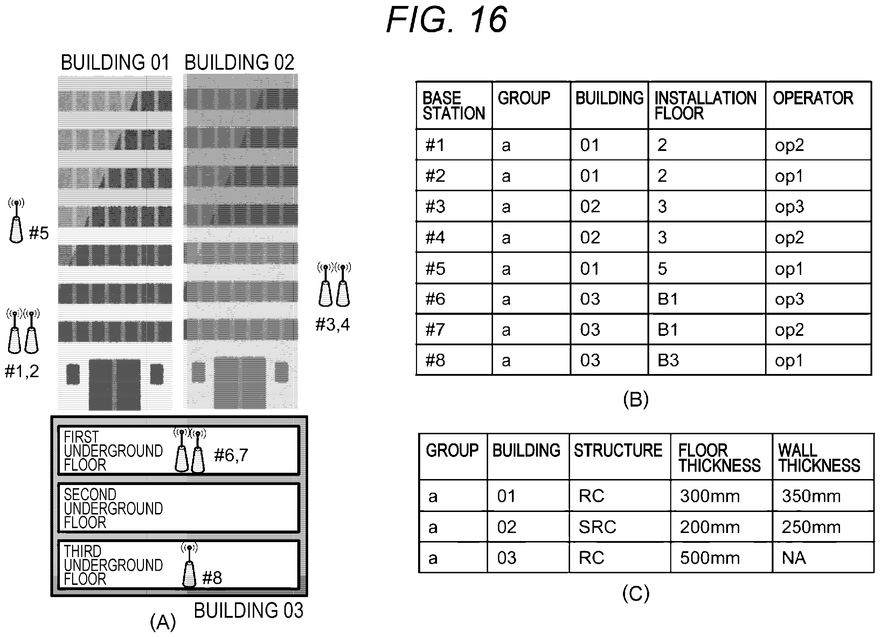

Fig. 16(A) illustrates an installation image example in which three buildings (Building 01, Building 02, and Building 03) are horizontally and vertically adjacent to each other. Fig. 16(B) and Fig. 16(C) illustrate examples of databases (tables) stored in the database apparatus 300. The meaning of the items in the database is the same as those in Fig. 14(B), Fig. 14(C), Fig. 15(B), and Fig. 15(C).

### (Example of Method for Writing to Database Apparatus 300)

A person in charge of writing to the database apparatus 300 (for example, a person qualified as the CPI) first records the information regarding the structures of all the buildings in which the base stations belonging to the group are installed, information regarding the floor thickness and the wall thickness in the database apparatus 300 before installing the first base station belonging to the group. Subsequently, when a new base station is installed, base station information including the installation floor of the base station is recorded in the database apparatus 300.

An example of processing until information regarding the new base station (referred to as "base station 401X") is recorded in the database apparatus 300, and then the base station 401X obtains permission to use the frequency included in the shared band to start transmission can be realized in the processing as in the second specific example (refer to Fig. 11).

An example of the interference amount determination processing (refer to step S505 in Fig. 11) in the third specific example will be described.

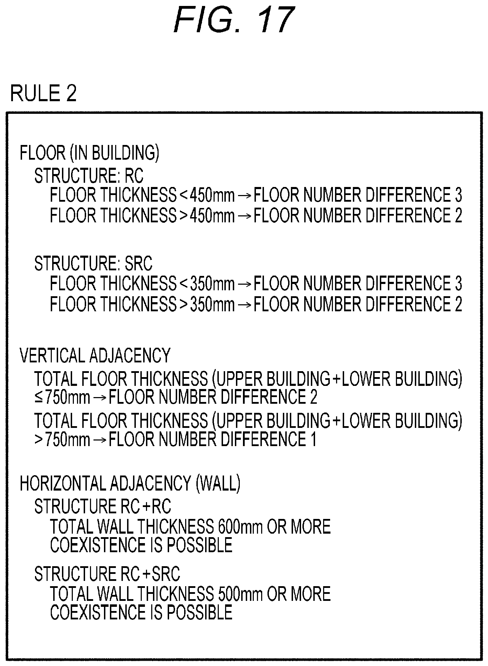

By using the building information (a structure, a floor thickness, a wall thickness, and the like) acquired from the database apparatus 300, the communication control apparatus 200 obtains a condition under which the base station 401X does not interfere with another base station (non-interference condition). For example, by using Rule 2 illustrated in Fig. 17, a floor number difference (in the case of the same building) at which the base station 401X does not interfere with another base station, or a total wall thickness (in the case of different buildings) with which the base station 401X does not interfere with another base station is obtained. The total wall thickness is the sum of the wall thicknesses between the base stations.

Fig. 17 is a diagram illustrating an example of Rule 2 for obtaining a condition under which the base stations do not interfere with each other. For example, in a case where a plurality of the buildings is vertically adjacent to each other, when the sum of the floor thicknesses of two buildings between the base stations is equal to or less than 750 mm, it is determined that the floor number difference at which interference does not occur between the base stations is two. That is, when the floor number difference is two or more, it is determined not to interfere with each other. On the other hand, in a case where the sum of the floor thicknesses is greater than 750 mm, the floor number difference at which interfere does not occur between the base stations is determined to be one. That is, when the floor number difference is one or more, it is determined not to interfere with each other.

Furthermore, in a case where a plurality of the buildings is horizontally adjacent to each other, when the structures of two buildings both include RC and the sum of the wall thicknesses (total wall thickness) between the base stations is equal to or greater than 600 mm, it is determined that the base stations can coexist with each other (do not interfere with each other). On the other hand, when the sum of the wall thicknesses is less than 600 mm, it is determined that the base stations cannot coexist with each other. Furthermore, in a case where the buildings are horizontally adjacent to each other, when one of the structures of the two buildings includes RC and the other one includes steel reinforced concrete (SRC), and the sum of the wall thicknesses between the base stations is equal to or greater than 500 mm, it is determined that the base stations can coexist with each other (do not interfere with each other). On the other hand, when the sum of the wall thicknesses is less than 500 mm, it is determined that the base stations cannot coexist with each other.

The floor number difference and information regarding the total wall thickness, information indicating whether or not the base stations can coexist with each other, and the like, which are calculated for the base station 401X, are stored in, for example, the storage unit 220 of the communication control apparatus 200 or the storage unit 320 (database) of the database apparatus 300.

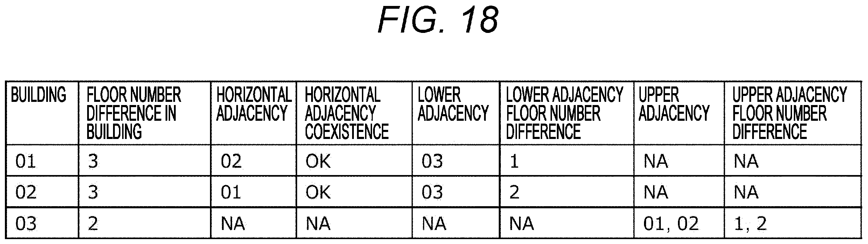

Fig. 18 is a table illustrating an example of the non-interference condition calculated according to Rule 2 in Fig. 17 in Case 3 described above (refer to Fig. 16). In the table of Fig. 18, as conditions applied to a base station installed in a building (01, 02, 03), for example, a condition for a floor number difference in the building, a condition for coexistence with a base station installed in a horizontally adjacent building, and a condition for a floor number difference with a base station installed in a vertically adjacent building are illustrated. The "horizontal adjacent coexistence" indicates a result of the possibility of coexistence calculated on the basis of the wall thickness or the like between the horizontally adjacent buildings. The vertical adjacency is divided into two cases of lower adjacency and upper adjacency. Since Building 01 exists on the ground and Building 03 exists under the ground, Building 03 as viewed from Building 01 is adjacent below. In a case where there is a lower adjacent building, the floor number difference at which coexistence is possible is calculated similarly to the case of being inside the building.

The usable frequency determination processing in the third specific example (refer to step S508 in Fig. 11) will be described.

When the frequency control apparatus 100 receives a usable frequency inquiry (radio wave use request) from the base station 401X, the frequency control apparatus 100 obtains a state in which all the base stations belonging to one or more other groups different from that of the base station 401X use the shared band. Furthermore, the frequency control apparatus 100 obtains a state in which the wireless communication system having a higher priority uses the shared band. The frequency control apparatus 100 calculates a usable frequency (two-dimensional use condition) for the base station 401X with respect to a base station or a system other than the group to which the base station 401X belongs on the basis of the obtained use state. The calculated usable frequency is referred to as a "frequency fa". The number of frequencies fa is one or more.

The frequency control apparatus 100 transmits, to the communication control apparatus 200, an inquiry of the frequency that can be used by the base station 401X in the group to which the base station 401X belongs among the frequencies fa. The inquiry or the usable frequency inquiry (radio wave use request) transmitted by the above-described base station 401X corresponds to an example of a first request related to the radio wave use of the base station 401X.

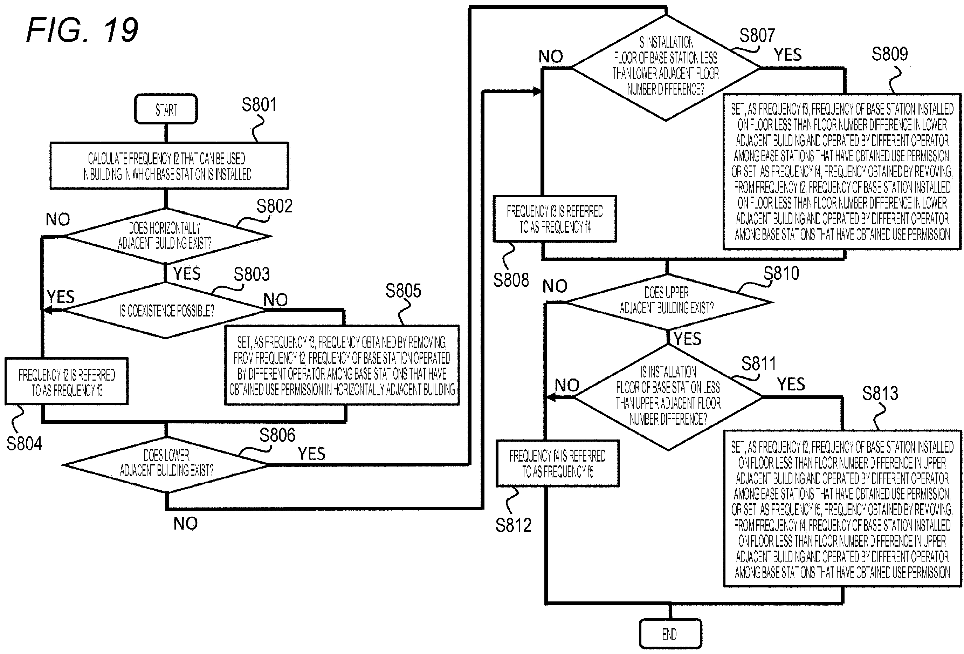

The communication control apparatus 200 calculates a frequency that can be used by the base station 401X in the group according to the flow of Fig. 19 (to be described later) with respect to the base station 401X, and transmits a response indicating the calculated frequency to the frequency control apparatus 100.

The frequency control apparatus 100 transmits a response (usable frequency response) indicating the frequency that can be used by the base station 401X in the group on the basis of the response received from the communication control apparatus 200.

Fig. 19 is a flowchart illustrating an example of processing in which the communication control apparatus 200 calculates a frequency that can be used by the base station 401X in the group. The communication control apparatus 200 calculates a frequency that can be used in the building in which the base station 401X is installed (S801). The calculated frequency is referred to as a "frequency f2". The number of frequencies f2 is one or more. A method of calculating the frequency f2 is similar to the method of calculating the frequency f2 in the second specific example (refer to Fig. 12).

Whether the building in which the base station 401X is installed has a horizontally adjacent building is determined (S802), and in a case where the horizontally adjacent building exists, whether the coexistence condition with the horizontally adjacent building is satisfied (coexistence is possible) is determined (S803). In a case where the coexistence condition is satisfied or in a case where there is no horizontally adjacent building, the frequency f2 is used as it is as a usable frequency (referred to as "frequency f3") (S804). On the other hand, in a case where the coexistence condition is not satisfied (coexistence is impossible), the base station that are installed in the horizontally adjacent building and obtains use permission is listed up (S805). In the list, a frequency for which a base station operated by an operator different from the operator operating the base station 401X has obtained use permission is specified (as in S805), and a frequency obtained by removing the specified frequency from the frequency f2 is set as a usable frequency ("frequency f3"). The number of frequencies f3 is one or more.

Whether the building in which the base station 401X is installed has a lower adjacent building is determined (S806), and in a case where the lower adjacent building exists, it is determined whether the installation floor of the base station 401X is less than the lower adjacent floor number difference (S807). In a case where the installation floor of the base station 401X is equal to or greater than the lower adjacent floor number difference or in a case where there is no lower adjacent building, the frequency f3 is used as it is as a usable frequency (referred to as "frequency f4") (S808). In a case where the installation floor of the base station 401X is less than the lower adjacent floor number difference, the base station that is installed on a floor less than the floor number difference in the lower adjacent building and has obtained use permission is listed up (S809). In the list, a frequency for which a base station operated by an operator different from the operator operating the base station 401X has obtained use permission is specified, and a frequency obtained by removing the specified frequency from the frequency f3 is set as a usable frequency ("frequency f4") (as in S809). The number of frequencies f4 is one or more.

Whether the building in which the base station 401X is installed has an upper adjacent building is determined (S810), and in a case where the upper adjacent building exists, it is determined whether the installation floor of the base station 401X is less than the upper adjacent floor number difference (S811). In a case where the installation floor of the base station 401X is equal to or greater than the upper adjacent floor number difference or in a case where there is no upper adjacent building, the frequency f4 is used as it is as a usable frequency (referred to as "frequency f5") (S812). In a case where the installation floor of the base station 401X is less than the upper adjacent floor number difference, the base station that is installed on a floor less than the floor number difference in the upper adjacent building and has obtained use permission is listed up (S813). In the list, a frequency for which a base station operated by an operator different from the operator operating the base station 401X has obtained use permission is specified, and a frequency obtained by removing the specified frequency from the frequency f4 is set as a usable frequency ("frequency f5") (as in S813). The number of frequencies f5 is one or more.

The communication control apparatus 200 finally determines the frequency f5 as the usable frequency of the base station 401X.

The use permission determination processing in the third specific example (refer to step S511 in Fig. 11) will be described.

The frequency control apparatus 100 receives a use permission request including a frequency (referred to as "frequency fb") for which the use permission is requested from the base station 401X. The frequency control apparatus 100 specifies a state in which all the base stations belonging to one or more other groups different from that of the base station 401X use the shared band. Furthermore, the frequency control apparatus 100 obtains a state in which the wireless communication system having a higher priority uses the shared band. The frequency control apparatus 100 calculates a frequency (two-dimensional use condition) that can be used by the base station 401X with respect to a base station or a system other than the group to which the base station 401X belongs on the basis of the obtained use state. In a case where the frequency fb is not included in the usable frequency, the frequency control apparatus 100 determines not to allow the use of the frequency fb at this time, and transmits a non-permission response to the base station 401X.

In a case where the frequency fb is included in the usable frequency, the frequency control apparatus 100 transmits, to the communication control apparatus 200, a use permission determination request for the use of the frequency fb in the group.

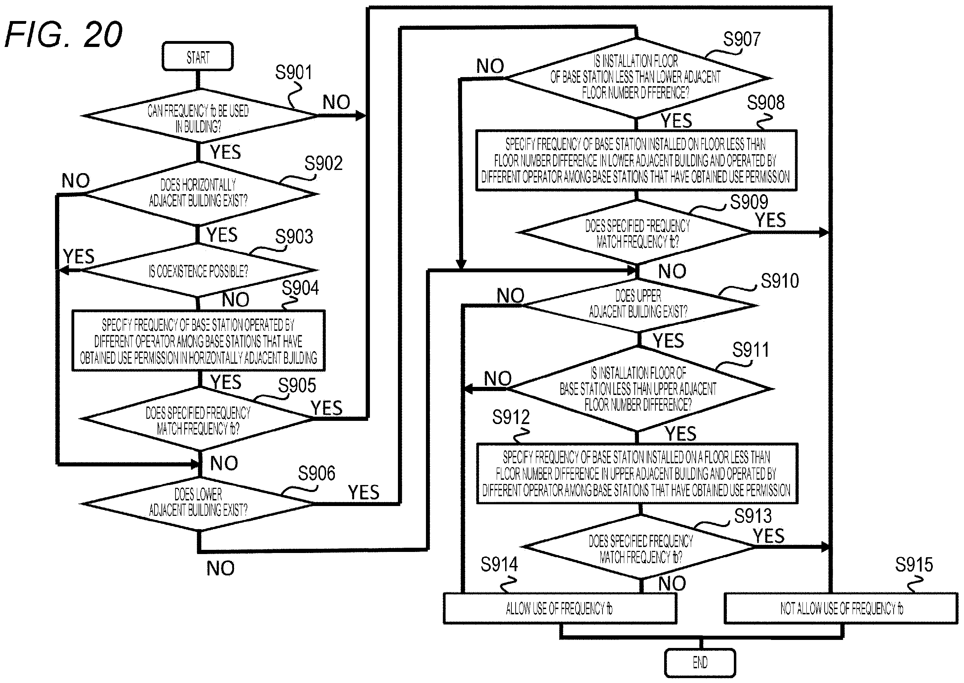

The communication control apparatus 200 performs a use permission determination for the use of the frequency fb in the group according to the flow of Fig. 20 (to be described later), and transmits a response including a determination result to the frequency control apparatus 100.

The frequency control apparatus 100 transmits, to the base station 401X, a response including whether or not the frequency fb can be used on the basis of the received response.

Fig. 20 is a flowchart illustrating an example of processing in which the communication control apparatus 200 determines whether or not the frequency fb requested by the base station 401X can be used in the group. First, it is determined whether or not the frequency fb can be used in the building in which the base station 401X is installed (S901). In a case where the frequency fb in the building cannot be used, it is determined not to allow the use of the frequency fb (S915), and the processing ends. In a case where the frequency fb in the building can be used, the processing proceeds to step S902. The determination method in step S901 is similar to the determination flow of the second specific example (refer to Fig. 13).

The communication control apparatus 200 determines whether the building in which the base station 401X is installed has a horizontally adjacent building (S902), and determines whether the coexistence condition with the horizontally adjacent building is satisfied (coexistence is possible) in a case where the horizontally adjacent building exists (S903). In a case where the coexistence condition is satisfied or in a case where the building in which the base station 401X is installed does not have the horizontally adjacent building, the processing proceeds to step S906. On the other hand, in a case where the coexistence condition is not satisfied (coexistence is impossible), the base station that is installed in the horizontally adjacent building and has obtained use permission is listed up, and a frequency for which a base station operated by an operator different from the operator operating the base station 401X has obtained use permission is specified in the list (S904). It is determined whether the frequency fb overlaps (matches) at least one of the specified frequencies (S905), and in a case where the frequency fb overlaps the specified frequency, it is determined that the frequency fb is not allowed to be used (S915), and the processing ends. In a case where the frequency fb does not overlap the specified frequency, the processing proceeds to step S906.

Whether the building in which the base station 401X is installed has a lower adjacent building is determined (S906), and in a case where the lower adjacent building exists, it is determined whether the installation floor of the base station 401X is less than the lower adjacent floor number difference (S907). In a case where the installation floor of the base station 401X is equal to or greater than the lower adjacent floor number difference or in a case where the building in which the base station 401X is installed does not have the lower adjacent building, the processing proceeds to step S910. In a case where the installation floor of the base station 401X is less than the lower adjacent floor number difference, the base station that is installed on a floor less than the floor number difference in the lower adjacent building and has obtained use permission is listed up, and a frequency for which a base station operated by an operator different from the operator operating the base station 401X has obtained use permission is specified in the list (S908). It is determined whether the frequency fb overlaps (matches) at least one of the specified frequencies (S909), and in a case where the frequency fb overlaps the specified frequency, it is determined that the frequency fb is not allowed to be used (S915), and the processing ends. In a case where the frequency fb does not overlap the specified frequency, the processing proceeds to step S910.

Whether the building in which the base station 401X is installed has an upper adjacent building is determined (S910), and in a case where the upper adjacent building exists, it is determined whether the installation floor of the base station 401X is less than the upper adjacent floor number difference (S911). In a case where the installation floor of the base station 401X is equal to or greater than the upper adjacent floor number difference or in a case where the building in which the base station 401X is installed does not have the upper adjacent building, the use of the frequency fb is allowed (S914). In a case where the installation floor of the base station 401X is less than the upper adjacent floor number difference, the base station that is installed on a floor less than the floor number difference in the upper adjacent building and has obtained use permission is listed up, and a frequency for which a base station operated by an operator different from the operator operating the base station 401X has obtained use permission is specified in the list (S912). It is determined whether the frequency fb overlaps (matches) at least one of the specified frequencies (S913), and in a case where the frequency fb overlaps the specified frequency, it is determined that the frequency fb is not allowed to be used (S915), and the processing ends. In a case where the frequency fb does not overlap the specified frequency, the use of the frequency fb is allowed (S914).

In the flow of Fig. 20, it is assumed that the use of the frequency fb is allowed in a case where the frequency fb overlaps the frequency of another base station operated by the same operator. However, even in the case of the same operator, the use of the frequency fb may not be allowed in a case where the frequency fb overlaps the frequency of another base station.

As described above, according to the present embodiment, the utilization efficiency of the frequency band that can be shared among a plurality of the wireless communication systems can be increased with a smaller calculation amount. Furthermore, the sharing method according to the present embodiment can coexist with a frequency band sharing method that has already been put into practical use with smaller change.

Note that the above effects are not necessarily limited, and any of the effects described in the present description or other effects that can be obtained from the present description may be exhibited in addition to or in place of the above effects.

### (Modification Example)

The frequency control apparatus 100 and the communication control apparatus 200 may be integrated as one communication control apparatus, and all processing may be performed by one communication control apparatus. Furthermore, some functions of the frequency control apparatus 100 may be added to the communication control apparatus 200.

Alternatively, one base station (wireless communication apparatus) may perform an inquiry or the like illustrated in Fig. 11 described above on each of a plurality of frequency control apparatuses 100. Furthermore, the base station may perform an inquiry illustrated in Fig. 11 on the communication control apparatus 200 without using the frequency control apparatus 100.

In the embodiment described above, the base station belongs to one group, but the base station may belong to a plurality of groups.

Furthermore, the order of the steps of the processing described in the above-described embodiment may not necessarily be executed in time series along the order described in the flowchart. For example, the steps in the processing may be performed in an order different from the order described in the flowchart, or may be performed in parallel.

Note that the above-described embodiment illustrates examples for embodying the present disclosure, and the present disclosure can be implemented in various other forms. For example, various modifications, substitutions, omissions, or combinations thereof can be made without departing from the gist of the present disclosure. Such modifications, substitutions, omissions, and the like are also included in the scope of the present disclosure and are similarly included in the invention described in the claims and the equivalent scopes thereof.

Furthermore, the effects of the present disclosure described in the present description are merely exemplification, and other effects may be provided.

Note that the present disclosure can have the following configurations.

### [Item 1]

A communication control apparatus including
a processing unit configured to, in a case where a first request for radio wave use of a first wireless communication apparatus belonging to a first group is received, determine parameter information regarding a radio wave capable of being used for the first wireless communication apparatus on the basis of installation environment information regarding the first wireless communication apparatus and another wireless communication apparatus belonging to the first group.

### [Item 2]

The communication control apparatus according to Item 1,
in which the processing unit determines the parameter information on the basis of a state in which the another wireless communication apparatus uses the radio wave.

### [Item 3]

The communication control apparatus according to Item 1 or 2,
in which the processing unit determines, as the parameter information, at least a frequency capable of being used for the first wireless communication apparatus.

### [Item 4]

The communication control apparatus according to Item 3,
in which the first group is a group to which a plurality of the wireless communication apparatuses installed on different floors in a building having a plurality of floors belongs.

### [Item 5]

The communication control apparatus according to Item 4,
in which the installation environment information includes information regarding a floor where the first wireless communication apparatus and the another wireless communication apparatus are installed, and
the processing unit determines a frequency capable of being used by the first wireless communication apparatus on the basis of a floor number difference between the first wireless communication apparatus and the another wireless communication apparatus.

### [Item 6]

The communication control apparatus according to Item 5,
in which the processing unit allows the first wireless communication apparatus to use a frequency having an interference relationship with a frequency used by the another wireless communication apparatus in a case where the floor number difference is equal to or greater than a threshold.

### [Item 7]

The communication control apparatus according to Item 6,
in which the installation environment information includes information regarding a floor thickness between the floors of the building, and
the threshold depends on a sum of floor thicknesses between a floor where the first wireless communication apparatus is installed and a floor where the another wireless communication apparatus is installed.

### [Item 8]

The communication control apparatus according to any one of Items 4 to 7,
in which the first group includes a plurality of the wireless communication apparatuses installed in a plurality of the buildings,
the installation environment information includes information regarding thicknesses of outer walls of a plurality of the buildings, and
the processing unit determines a frequency capable of being used by the first wireless communication apparatus on the basis of the thicknesses of the outer walls between the first wireless communication apparatus and the another wireless communication apparatus.

### [Item 9]

The communication control apparatus according to Item 8,
in which the processing unit allows the first wireless communication apparatus to use a frequency having an interference relationship with a frequency used by the another wireless communication apparatus in a case where a sum of the thicknesses of the outer walls is equal to or greater than a threshold.

### [Item 10]

The communication control apparatus according to Item 9,
in which the threshold depends on a structure of a building in which the first wireless communication apparatus is installed and a structure of a building in which the another wireless communication apparatus is installed.

### [Item 11]

The communication control apparatus according to Item 10,
in which the structure of the building in which the first wireless communication apparatus is installed and the structure of the building in which the another wireless communication apparatus is installed include reinforced concrete or steel reinforced concrete.

### [Item 12]

The communication control apparatus according to any one of Items 4 to 11,
in which the installation environment information includes information regarding radio wave interference from the another wireless communication apparatus, which is measured at a time of installation of the first wireless communication apparatus, and
the processing unit determines a frequency capable of being used by the first wireless communication apparatus on the basis of the information regarding the radio wave interference.

### [Item 13]

The communication control apparatus according to Item 12,
in which the information regarding the radio wave interference includes an attenuation amount of power of a radio wave transmitted from the another wireless communication apparatus to the first wireless communication apparatus, and
the processing unit determines a frequency capable of being used by the first wireless communication apparatus on the basis of the attenuation amount of the power and a transmission power value of the another wireless communication apparatus.

### [Item 14]

The communication control apparatus according to any one of Items 1 to 13, further including
a communication unit configured to transmit the parameter information to the first wireless communication apparatus or a frequency control apparatus configured to control radio wave use of the first wireless communication apparatus.

### [Item 15]

The communication control apparatus according to any one of Items 1 to 14, further including
a communication unit configured to receive the first request from the first wireless communication apparatus or a frequency control apparatus configured to control radio wave use of the first wireless communication apparatus.

### [Item 16]

The communication control apparatus according to any one of Items 3 to 13,
in which the first request includes information regarding a first frequency requested to be used by the first wireless communication apparatus, and
the processing unit determines whether or not the frequency requested in the first request interferes with a second frequency used by the another wireless communication apparatus on the basis of the installation environment information, determines that the first frequency is capable of being used in a case where the first frequency does not interfere with the second frequency, and determines that the first frequency is not capable of being used in a case where the first frequency interferes with the second frequency.

### [Item 17]

The communication control apparatus according to Item 16,
in which in a case where the first frequency interferes with the second frequency, the processing unit determines a third frequency allowed to be used for the first wireless communication apparatus from among usable frequency candidates of the first wireless communication apparatus.

### [Item 18]

A communication control method including, in a case where a first request for a first wireless communication apparatus belonging to a first group is received, determining parameter information regarding a radio wave capable of being used by the first wireless communication apparatus on the basis of installation environment information regarding the first wireless communication apparatus and another wireless communication apparatus belonging to the first group.

### REFERENCE SIGNS LIST

- 100: Frequency control apparatus
- 200: Communication control apparatus
- 210: Communication unit
- 220: Storage unit
- 230: Processing unit
- 231: Element
- 231: Information acquisition unit
- 233: Element
- 233: Control unit
- 300: Database apparatus
- 310: Communication unit
- 320: Storage unit
- 330: Processing unit
- 401: Base station
- 401A: Base station
- 401B: Base station
- 401C: Base station
- 401D: Base station
- 401E: Base station
- 401X: Base station
- 501: Wireless communication system
- 502: Wireless communication system
- 550: Wireless communication system

## Claims

1. A communication control apparatus comprising
a processing unit configured to, in a case where a first request for radio wave use of a first wireless communication apparatus belonging to a first group is received, determine parameter information regarding a radio wave capable of being used for the first wireless communication apparatus on a basis of installation environment information regarding the first wireless communication apparatus and another wireless communication apparatus belonging to the first group.

2. The communication control apparatus according to claim 1,
wherein the processing unit determines the parameter information on a basis of a state in which the another wireless communication apparatus uses the radio wave.

3. The communication control apparatus according to claim 1,
wherein the processing unit determines, as the parameter information, at least a frequency capable of being used for the first wireless communication apparatus.

4. The communication control apparatus according to claim 3,
wherein the first group is a group to which a plurality of the wireless communication apparatuses installed on different floors in a building having a plurality of floors belongs.

5. The communication control apparatus according to claim 4,
wherein the installation environment information includes information regarding a floor where the first wireless communication apparatus and the another wireless communication apparatus are installed, and
the processing unit determines a frequency capable of being used by the first wireless communication apparatus on a basis of a floor number difference between the first wireless communication apparatus and the another wireless communication apparatus.

6. The communication control apparatus according to claim 5,
wherein the processing unit allows the first wireless communication apparatus to use a frequency having an interference relationship with a frequency used by the another wireless communication apparatus in a case where the floor number difference is equal to or greater than a threshold.

7. The communication control apparatus according to claim 6,
wherein the installation environment information includes information regarding a floor thickness between the floors of the building, and
the threshold depends on a sum of floor thicknesses between a floor where the first wireless communication apparatus is installed and a floor where the another wireless communication apparatus is installed.

8. The communication control apparatus according to claim 4,
wherein the first group includes a plurality of the wireless communication apparatuses installed in a plurality of the buildings,
the installation environment information includes information regarding thicknesses of outer walls of a plurality of the buildings, and
the processing unit determines a frequency capable of being used by the first wireless communication apparatus on a basis of the thicknesses of the outer walls between the first wireless communication apparatus and the another wireless communication apparatus.

9. The communication control apparatus according to claim 8,
wherein the processing unit allows the first wireless communication apparatus to use a frequency having an interference relationship with a frequency used by the another wireless communication apparatus in a case where a sum of the thicknesses of the outer walls is equal to or greater than a threshold.

10. The communication control apparatus according to claim 9,
wherein the threshold depends on a structure of a building in which the first wireless communication apparatus is installed and a structure of a building in which the another wireless communication apparatus is installed.

11. The communication control apparatus according to claim 10,
wherein the structure of the building in which the first wireless communication apparatus is installed and the structure of the building in which the another wireless communication apparatus is installed include reinforced concrete or steel reinforced concrete.

12. The communication control apparatus according to claim 4,
wherein the installation environment information includes information regarding radio wave interference from the another wireless communication apparatus, which is measured at a time of installation of the first wireless communication apparatus, and
the processing unit determines a frequency capable of being used by the first wireless communication apparatus on a basis of the information regarding the radio wave interference.

13. The communication control apparatus according to claim 12,
wherein the information regarding the radio wave interference includes an attenuation amount of power of a radio wave transmitted from the another wireless communication apparatus to the first wireless communication apparatus, and
the processing unit determines a frequency capable of being used by the first wireless communication apparatus on a basis of the attenuation amount of the power and a transmission power value of the another wireless communication apparatus.

14. The communication control apparatus according to claim 1, further comprising
a communication unit configured to transmit the parameter information to the first wireless communication apparatus or a frequency control apparatus configured to control radio wave use of the first wireless communication apparatus.

15. The communication control apparatus according to claim 1, further comprising
a communication unit configured to receive the first request from the first wireless communication apparatus or a frequency control apparatus configured to control radio wave use of the first wireless communication apparatus.

16. The communication control apparatus according to claim 3,
wherein the first request includes information regarding a first frequency requested to be used by the first wireless communication apparatus, and
the processing unit determines whether or not the frequency requested in the first request interferes with a second frequency used by the another wireless communication apparatus on a basis of the installation environment information, determines that the first frequency is capable of being used in a case where the first frequency does not interfere with the second frequency, and determines that the first frequency is not capable of being used in a case where the first frequency interferes with the second frequency.

17. The communication control apparatus according to claim 16,
wherein in a case where the first frequency interferes with the second frequency, the processing unit determines a third frequency allowed to be used for the first wireless communication apparatus from among usable frequency candidates of the first wireless communication apparatus.

18. A communication control method comprising, in a case where a first request for a first wireless communication apparatus belonging to a first group is received, determining parameter information regarding a radio wave capable of being used by the first wireless communication apparatus on a basis of installation environment information regarding the first wireless communication apparatus and another wireless communication apparatus belonging to the first group.
